(19) Europäisches Patentamt
European Patent Office
Office européen des brevets

(11) EP 1 640 693 A1

(12) EUROPEAN PATENT APPLICATION

(43) Date of publication:
29.03.2006 Bulletin 2006/13

(51) Int Cl.:
*G01D 5/38* (2006.01)

(21) Application number: 04380193.5

(22) Date of filing: 28.09.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(71) Applicant: FAGOR, S.Coop
20500 Mondragon (Guipuzcoa) (ES)

(72) Inventors:
• Morlanes Calvo, Tomas
1011 Vitoria-Gasteiz (Alava) (ES)
• Urra Chandia, Juan Carlos
20500 Mondragon (Gipuzkoa) (ES)

(74) Representative: Fernandez Guzman, Juan
Apartado 213,
Barrio San Andres s/n
20500 Mondragon (Gipuzkoa) (ES)

(54) **Optical position sensor with three photodetectors**

(57) Optical measuring device for determining the relative displacement (D) between a first and a second object, which comprises a light source (1) and a reader head (2) linked to the first object, and a scale (3) linked to the second object, the reader head (2) comprising three photodetectors (21,22,23) aligned in the direction of displacement (D), and the scale (3) comprising a sequence of portions with a specific space period (p). The reader head (2) also comprises three windows (31,32,33) facing the three photodetectors (21,22,23) respectively, said windows (31,32,33) comprising a sequence of portions. At the output of the photodetectors (21,22,23), three sinusoidal signals (R,S,T) that are out of phase by a third of a period (p/3) are obtained. The sum of said three sinusoidal signals (R,S,T) is used as a feedback signal, and said signals (R,S,T) are used to obtain two sinusoidal signals (A,B) by means of which the relative displacement (D) is determined.

Fig. 1

EP 1 640 693 A1

**Description**

TECHNICAL FIELD

The present invention relates to optical measuring devices for determining the extent and sense of the relative displacement of a first object with respect to a second object.

PRIOR ART

Optical devices used to measure the relative displacement between a first object and a second object that comprise a light source and a reader head linked to the first object and a graduated scale linked to the second object are already known. The light source emits a light beam that is received by the reader head. The relative displacement of the graduated scale in relation to said light source and said reader head results in the modulation of said light beam in such a way that the light beam received by the reader head allows said relative displacement to be determined.

Optical devices of these characteristics based on the Moire effect are already known. In said optical devices, the graduated scale comprises a sequence of alternating translucent and opaque portions, and the reader head comprises a window which also has a sequence of alternating translucent and opaque portions, and photodetectors that receive the light beam passing through the graduated scale and the window, the photodetectors receiving sinusoidal light signals. GB760321 describes an optical measuring device based on the Moire effect which comprises two photodetectors positioned in such a way that they receive sinusoidal light signals that are out of phase with one another by a fraction of half of the period of said sinusoidal signals, said phase displacement normally being of a quarter of a period. Thus, in addition to determining the extent of the displacement in accordance with the cycles recorded, the sense of displacement is also determined. Said sinusoidal signals are rectified and the resulting square signals are used to obtain the relative displacement.

The disadvantage with these types of devices with two photodetectors is that any variation in the continuous component of the sinusoidal signals causes distortion in the resulting square signals. To prevent this problem, two further photodetectors are added with the two sinusoidal signals being obtained from the four photodetectors. Two photodetectors are used to obtain two sinusoidal signals that are out of phase with one another by a quarter of a period, i.e. two sinusoidal signals in quadrature, and the other two photodetectors are used to obtain sinusoidal signals in counterphase with said two signals in quadrature. By taking away the sinusoidal signals in counterphase from the two sinusoidal signals in quadrature respectively, two sinusoidal signals in quadrature are obtained in which the possible variation in the continuous component is eliminated. GB810478 discloses a device with these characteristics.

US4650993 describes an optical measuring device that comprises, instead of four photodetectors, four photodetector groups which are used to obtain the four sinusoidal signals, which, when combined in pairs, provide the two sinusoidal signals in quadrature. Said four sinusoidal signals are also used to obtain a feedback signal which can be used to control the amount of light emitted by the light source.

There are optical measuring devices that use only three photodetectors instead of four. GB1092525 discloses an optical measuring device in which three photodetectors are used to obtain three sinusoidal signals that are out of phase with one another by one sixth of a period. These three sinusoidal signals are used for obtaining five square signals to obtain the relative displacement in accordance with said square signals.

US4776701 also describes an optical measuring device with three photodetectors, although this is an interferodiffractive-type device that is not based, therefore, on the Moire effect. US2001/0030282 also describes an optical measuring device with three photodetectors although it is not based on the Moire effect either.

DISCLOSURE OF THE INVENTION

The object of the invention is to provide an optical measuring device with three photodetectors that is an alternative solution to the devices already existing in the prior art.

The inventive optical measuring device enables the relative displacement between a first object and a second object to be determined. It comprises a light source and a reader head linked to the first object and a scale linked to the second object. The reader head comprises three photodetectors aligned in the direction of the relative displacement, and the scale comprises a sequence of alternating translucent and opaque portions with a specific space period.

The reader head also comprises three windows that face the three photodetectors respectively. Said windows comprise a sequence of alternating translucent and opaque portions, with the three windows being displaced in relation to one another by a whole number of periods plus one third of a period. Thus, at the output of the photodetectors three sinusoidal signals that are out of phase with one another by one third of a period are obtained. The sum of said three sinusoidal signals is used as a feedback signal, and the three sinusoidal signals are used to obtain two sinusoidal signals that are out of phase with one another by a fraction of half of the period. The relative displacement is determined by said two sinusoidal signals.

In the inventive device, as in other devices in the prior art, three photodetectors are used instead of four. The advantage of this is that, apart from dispensing with one of the photodetectors, the useful area illuminated on the scale is reduced. This involves the reduction of the dimensions of the device because, as the area to be illuminated by the light source is smaller, the focal of said light source can also be reduced.

Furthermore, the inventive device also allows a feedback signal to be generated in a simple manner, allowing the amplitude of the luminous intensity of the light generated by the light source to be kept constant.

In addition, given that the relative displacement is obtained by using two phase-displaced analogous signals obtained from the three sinusoidal signals of the three photodetectors, the precision in calculating the displacement is greater than if said calculation is made using square signals obtained directly from the three sinusoidal signals of the three photodetectors.

Another advantage of the invention lies in the improvement of the immunity of the two resulting sinusoidal signals against the disturbances of the three sinusoidal signals of the three photodetectors, as each of the said two sinusoidal signals is obtained from the combination of the three sinusoidal signals of the three photodetectors.

These and other advantages and characteristics of the invention will be made evident in the light of the drawings and the detailed description thereof.

DESCRIPTION OF THE DRAWINGS

FIGURE 1 is a schematic view that shows the main elements of the inventive device.

FIGURE 2 is a schematic view that shows how the feedback process is conducted in the inventive device.

FIGURE 3 is a graphic representation of the three signals obtained at the output of the three photodetectors of the inventive device, as well as the signal resulting from the sum of said three signals.

FIGURE 4 is a schematic view that shows how the three signals obtained at the output of the three photodetectors are used to obtain the two sinusoidal signals used to determine the relative displacement.

FIGURE 5 is a diagram of phasors that shows, by way of example, a possible positioning of the two sinusoidal signals used to determine the relative displacement in relation to the three signals obtained at the output of the three photodetectors.

DETAILED DESCRIPTION OF THE INVENTION

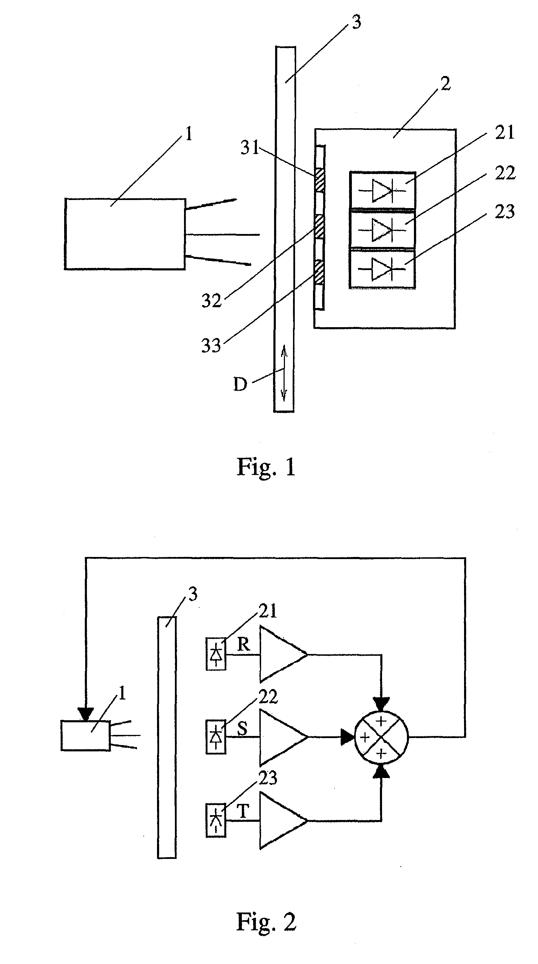

With reference to figure 1, the inventive optical device comprises a light source 1 and a reader head 2 linked to a first object, and a scale 3 linked to a second object. The reader head 2 comprises three photodetectors 21, 22 and 23 aligned in the direction of relative displacement D between the first object and the second object. Said photodetectors 21, 22 and 23 are photodiodes. Although in the example of the embodiment in figure 1 the displacement D measured by the reader head 2 is a linear displacement, the inventive device can also be implemented in order to measure angular displacements. Furthermore, although three photodetectors 21, 22 and 23 are used in the preferred embodiment, three photodetector groups can also be used.

The scale 3 comprises a sequence of alternating translucent and opaque portions (not shown in the figures) with a specific space period p. The reader head 2 comprises three windows 31, 32 and 33 facing the three photodetectors 21, 22 and 23 respectively, with said windows 31, 32 and 33 comprising a sequence of alternating translucent and opaque portions (not shown in the figures). The portions of the windows 31, 32 and 33 do not necessarily have to be the same as the portions of the scale 3.

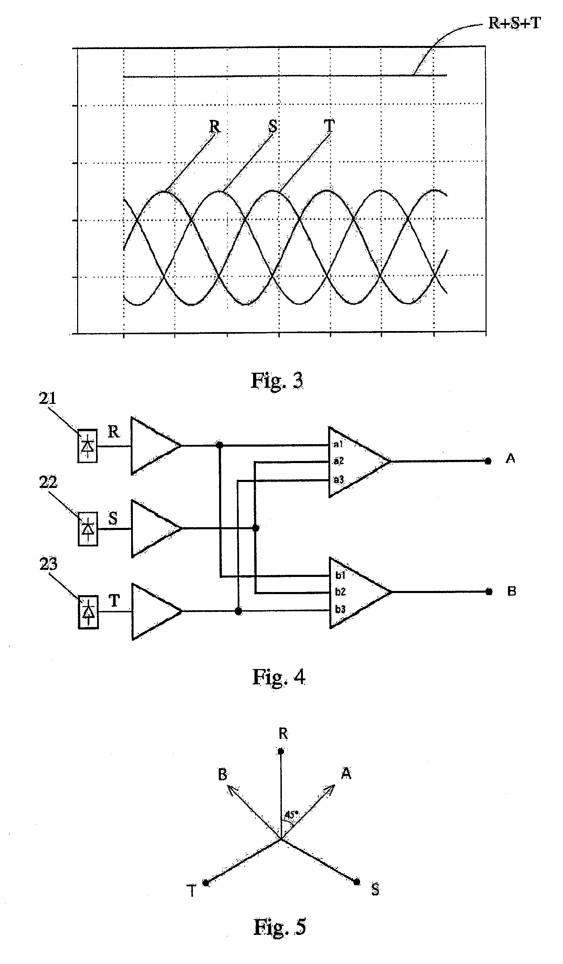

The three windows 31, 32 and 33 are displaced in relation to one another in a whole number of periods p plus one third of a period, p/3. As a result, at the output of the photodetectors 21, 22 and 23 three sinusoidal signals R, S and T that are out of phase with one another by a third of a period, p/3, are obtained, as shown in figure 3.

The inventive device also comprises an electronic circuit for the treatment of the sinusoidal signals R, S and T. Said electronic circuit uses the sum of the three sinusoidal signals R, S and T, as shown in figure 2, as a feedback signal. With reference to figure 3, the sum of the three sinusoidal signals R, S and T provides a signal with a constant value that is proportional to the total luminous intensity, thus making it an ideal signal for the feedback process. The amplitude of the signals is kept constant in this way, thus preventing the effects associated with the possible ageing of the optoelectronic system and improving behaviour against any dirt that may be deposited on the scale 3 or against any defects that the graduation of said scale 3 may have. In the most common case, the light source 1 comprises a LED and said LED is powered according to the value of the feedback signal.

With reference to figure 4, the three sinusoidal signals R, S and T are used to obtain two sinusoidal signals A and B, with the relative displacement D being determined by said signals A and B. The signals A and B have a phase displacement $\alpha$ in relation to one another of a fraction of half of the period p. Said phase displacement $\alpha$ is preferably 90°, with the result, therefore, that said signals A and B are two signals in quadrature.

The two sinusoidal signals A and B are obtained by applying the previously calculated amplification coefficients a1, a2, a3, b1, b2 and b3 to the three sinusoidal signals R, S and T and combining the resulting signals in relation to one another. Said amplification coefficients a1, a2, a3, b1, b2 and b3 are obtained by a diagram of phasors.

Figure 5 provides, by way of example, a diagram of phasors with a possible positioning of the signals A and B in relation to the signals R, S and T. The following equations are obtained for the diagram of phasors in figure 5:

$$a_2 - a_3 = \frac{1}{\sqrt{6}}$$

$$2\,a_1 - a_2 - a_3 = \sqrt{2}$$

$$b_2 - b_3 = -\frac{1}{\sqrt{6}}$$

$$2\,b_1 - b_2 - b_3 = \sqrt{2}$$

Furthermore, in a preferred embodiment the amplification coefficients a1, a2, a3, b1, b2 and b3 are selected in such a way that the average value of the two sinusoidal signals A and B is equal to a reference tension Vref, which is the reference tension of the electronic circuit of the invention. If Vref=0, the following are added to the previous equations:

$$a_1 + a_2 + a_3 = 0$$

$$b_1 + b_2 + b_3 = 0$$

In this case the amplification coefficients would therefore be as follows:

$$a_1 = \frac{\sqrt{2}}{3} \; ; \quad a_2 = \frac{1}{2\sqrt{6}} - \frac{\sqrt{2}}{6} \; ; \quad a_3 = -\frac{1}{2\sqrt{6}} - \frac{\sqrt{2}}{6}$$

$$b_1 = \frac{\sqrt{2}}{3} \; ; \quad b_2 = -\frac{1}{2\sqrt{6}} - \frac{\sqrt{2}}{6} \; ; \quad b_3 = \frac{1}{2\sqrt{6}} - \frac{\sqrt{2}}{6}$$

Obviously, if the conditions imposed were different, i.e. if a different position for the signals A and B in relation to the signals R, S and T had been selected, or another tension reference Vref had been selected, the values obtained for the amplification coefficients would have been different.

**Claims**

1. Optical measuring device for determining the relative displacement (D) between a first object and a second object, which comprises a light source (1) and a reader head (2) linked to the first object, and a scale (3) linked to the second object, the reader head (2) comprising three photodetectors (21,22,23) aligned in the direction of relative displacement (D), and with the scale (3) comprising a sequence of alternating translucent and opaque portions with a specific space period (p),
**characterized in that** the reader head (2) also comprises three windows (31,32,33) facing the three photodetectors (21,22,23) respectively, said windows (31,32,33) comprising a sequence of alternating translucent and opaque portions, the three windows (31,32,33) being displaced in relation to one another in a whole number of periods (p) plus one third of a period (p/3) to thus obtain at the output of the photodetectors (21,22,23) three sinusoidal signals (R,S,T) that are out of phase with one another by a third of a period (p/3), the sum of said three sinusoidal signals (R,S,T) being used as a feedback signal, and the three sinusoidal signals (R,S,T) being used to obtain two sinusoidal signals (A,B) that have a phase displacement ($\alpha$) in relation to one another of a fraction of half of the period (p) and the relative displacement (D) being determined by said two sinusoidal signals (A,B).

2. Device according to claim 1, wherein the two sinusoidal signals (A,B) are obtained by applying previously calculated amplification coefficients (a1,a2,a3,b1,b2,b3) to the three sinusoidal signals (R,S,T) and combining the resulting signals in relation to one another.

3. Device according to claim 2, wherein said amplification coefficients (a1,a2,a3,b1,b2,b3) are obtained by a diagram of phasors.

4. Device according to claim 3, wherein the amplification coefficients (a1,a2,a3,b1,b2,b3) are selected in such a way that the average value of the two sinusoidal signals (A,B) is equal to a reference tension (Vref).

5. Device according to any of the preceding claims, wherein the two sinusoidal signals (A,B) are two signals in quadrature.

Fig. 1

Fig. 2

Fig. 3

Fig. 4

Fig. 5

**European Patent Office**

**EUROPEAN SEARCH REPORT**

Application Number

EP 04 38 0193

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 3 388 262 A (STUTZ THEO) 11 June 1968 (1968-06-11) * column 3, line 61 - column 5, line 60; figures 1,2,4 * ----- | 1-5 | G01D5/38 |
| Y | DE 12 07 100 B (FERRANTI LTD; ELECTRICAL & GENERAL ENGINEERS) 16 December 1965 (1965-12-16) * column 4, line 26 - column 5, line 6; figure 2 * ----- | 1,5 | |
| Y | US 3 441 741 A (CONRAD REGINALD COOKE) 29 April 1969 (1969-04-29) * column 2, line 40 - column 3, line 30; figures 1-3,5c * ----- | 1-4 | |
| Y | US 5 317 385 A (SILVA ET AL) 31 May 1994 (1994-05-31) * figure 2 * ----- | 1 | |
| Y | US 4 983 828 A (STEPHENS ET AL) 8 January 1991 (1991-01-08) * column 2, line 50 - column 3, line 63; figures 2-4 * ----- | 1-5 | TECHNICAL FIELDS SEARCHED (Int.Cl.7) G01D |

The present search report has been drawn up for all claims

| Place of search | Date of completion of the search | Examiner |
|---|---|---|
| Munich | 9 February 2005 | Kallinger, C |

EPO FORM 1503 03.82 (P04C01)

## ANNEX TO THE EUROPEAN SEARCH REPORT
## ON EUROPEAN PATENT APPLICATION NO.

EP 04 38 0193

This annex lists the patent family members relating to the patent documents cited in  the above-mentioned European search report.
The members are as contained in the European Patent Office EDP file on
The European Patent Office is in no way  liable for these particulars which are merely  given for the purpose of information.

09-02-2005

| Patent document cited in search report | | Publication date | Patent family member(s) | | Publication date |
|---|---|---|---|---|---|
| US 3388262 | A | 11-06-1968 | CH<br>BE<br>GB<br>NL<br>SE | 426285 A<br>660478 A<br>1097494 A<br>6501853 A<br>323814 B | 15-12-1966<br>01-07-1965<br>03-01-1968<br>17-09-1965<br>11-05-1970 |
| DE 1207100 | B | 16-12-1965 | NONE | | |
| US 3441741 | A | 29-04-1969 | NONE | | |
| US 5317385 | A | 31-05-1994 | NONE | | |
| US 4983828 | A | 08-01-1991 | DE<br>DE<br>EP<br>EP<br>WO<br>WO<br>JP<br>JP<br>US | 3765526 D1<br>3770600 D1<br>0271549 A1<br>0272296 A1<br>8707943 A1<br>8707944 A1<br>63503564 T<br>63503565 T<br>4949289 A | 15-11-1990<br>11-07-1991<br>22-06-1988<br>29-06-1988<br>30-12-1987<br>30-12-1987<br>22-12-1988<br>22-12-1988<br>14-08-1990 |

EPO FORM P0459

For more details about this annex : see Official Journal of the European Patent Office, No. 12/82